# EUROPEAN PATENT APPLICATION

(11) **EP 2 821 990 A1**
(43) Date of publication of application: **07.01.2015**
(21) Application number: 13174600.0
(22) Date of filing: 02.07.2013
(51) Int. Cl.: G10K 11/16

(54) **System comprising a sound attenuating panel**

(71) Applicant: Koninklijke Philips N.V., 5656 AE Eindhoven (NL)
(72) Inventor: Klabunde, Karin, 5600 AE Eindhoven (NL); Mason, Jonathan David, 5600 AE Eindhoven (NL); Meerbeek, Berent Willem, 5600 AE Eindhoven (NL); Sarroukh, Bahaa Eddine, 5600 AE Eindhoven (NL)
(74) Representative: Pet, Robert Jacob

(57) **Abstract**

The invention provides a system (1) comprising a sound attenuating panel (100), a control unit (15), and a sound sensor (20), wherein the sound sensor (20) is configured to measure sound in a space wherein the sound attenuating panel (100) is applied and is configured to provide a corresponding sound sensor signal, wherein the control unit (15) is configured to control a controllable device as function of the sound sensor signal, wherein the controllable device is selected from the group consisting of a sound attenuating panel (100) having controllable properties and another device having controllable properties.

## Description

### FIELD OF THE INVENTION

The invention relates to a system comprising a sound attenuating panel, to a sound attenuating panel per se, as well as to a method to assist a human in performing an activity.

### BACKGROUND OF THE INVENTION

Acoustic panels, such as for use in work spaces, are known in the art. An example of an acoustic panel can e.g. be found in WO 2013/085935. This document describes a sound absorbing luminaire providing lighting for an interior space environment and managing the acoustics within the environment. The luminaire includes a frame holding an acoustic film and a lighting element, forming a resonant cavity between them. The acoustic film is used for absorbing sound within the resonant cavity, and the lighting element provides light from a light source, such as LEDs, through the acoustic film. An optical film can be mounted in the frame between the acoustic film and the lighting element for providing a desired distribution of light.

### SUMMARY OF THE INVENTION

The office environment is changing. New type of working environment, sometimes referred to as 'workplace innovation", can be observed. There is a clear trend in offices towards different areas for special purposes like e.g. meetings, telephone calls or concentrated work.

There are less single-person offices and fixed personal workplaces. Rather, people choose on a daily basis the type of work place that is appropriate for their current task. The driving forces behind this development are demands for higher flexibility with respect to collaborative ways of working (e.g. flexibly grouping people into teams) and for more efficient use of office space in general. Within these new -more open, adaptive- office environments, appropriate lighting, noise, acoustics and privacy concerns play a much more important role.

In open office spaces many people are working close to each other, so well-designed desk dividers (for usage towards opposite colleague or for colleagues sitting face by face) can improve working conditions in such an environment considerably. With respect to acoustics and noise a number of measures can be taken, like e.g. usage of sound absorbing panels at ceiling, walls, desk dividers, etc. The most effective sound reduction is achieved when the higher frequencies of human speech, those that lend intelligibility, are those which are absorbed. Having reflection of low frequencies may be an advantage in that it permits an ambient sound level that can reinforce the background masking sound. Further, effective sound masking techniques may be applied. These measures can be costly and require a lot of effort.

Current desk dividers are used in open office spaces for two main reasons: 1) improving the acoustic environment in these open areas; 2) providing visual privacy for the people working in the open space. A big disadvantage of existing desk divider solutions is that they are static and do not adapt to changes in the open office environment. For example, people might change their type of activity several times during the day from concentrated work to communicating with colleagues. A desk divider (or room divider) that could adapt its functioning to better suit the needs of the office worker is desirable to enhance satisfaction with the work environment and possibly even productivity.

Hence, it is an aspect of the invention to provide an alternative system comprising a sound attenuating panel, which preferably further at least partly obviates one or more of above-described drawbacks. It is also an aspect of the invention to provide an alternative sound attenuating panel, for instance for use as room divider or desk divider, which preferably further at least partly obviates one or more of above-described drawbacks. Further, it is also an aspect of the invention to provide a method to assist a human in performing an activity, for instance by illuminating a work space (or other space), by reducing sound in a work space (or other space), or by guiding a person to a quiet part of a (work) space.

In a first aspect, the invention provides a system comprising a sound attenuating panel ("panel")(optionally having controllable properties), a control unit, and a sound sensor, wherein the sound sensor is configured to measure sound in a space wherein the sound attenuating panel is applied and is configured to provide a corresponding sound sensor signal, wherein the control unit is configured to control a controllable device as function of the sound sensor signal, wherein the controllable device is selected from the group consisting of a sound attenuating panel having controllable properties and another device having controllable properties. Controllable properties may e.g. comprise one or more of the acoustic properties of the sound attenuating panel, the lighting properties of a light source (embedded or not in the sound attenuating panel), the sound properties of a speaker, the sound properties of a microphone, the signal provided by a signal unit, etc.

Yet, in a further aspect the invention especially provides a sound attenuating panel (optionally having controllable properties), comprising a light source that is configured to provide light ("light source light") into a transparent unit part (of the sound attenuating panel), wherein the transparent unit part has light guiding properties and wherein the transparent unit part is configured to allow transmission of visible light from a first face of the sound attenuating panel to a second face, and wherein the transparent unit part and light source are configured (to be able) to provide light escaping to at least one of the faces of the sound attenuating panel, wherein the sound attenuating panel further comprises a control unit configured to control a controllable device as function of a sound sensor signal of a sound sensor, wherein the controllable device is selected from the group consisting of a sound attenuating panel having controllable properties and another device having controllable properties.

In yet a further aspect, the invention also provides a method to assist a human in performing an activity, the method comprising using the system as described herein, and controlling with the control unit one or more settings of the controllable device as function of the sound sensor signal, wherein the controllable device is selected from a group consisting of (i) a light source not embedded in the sound attenuating panel, (ii) a sound attenuating panel with a light source embedded therein, (iii) a sound attenuating panel having controllable sound attenuation properties, (iv) a speaker, (v) a microphone, and (vi) a signal unit. The speaker, microphone and signal unit can each independently be embedded in the sound attenuating panel but may also each independently be arranged elsewhere in a space wherein the sound attenuating panel is present.

Advantageously, with such system, sound attenuating panel and method, it is for instance possible to monitor sound in a space, or to control sound generation in a space. A person in the space may be informed about quiet and less quiet parts of the space, but persons in the space may also be facilitated in communicating, while reducing or avoiding nuisance for others. Alternatively or additionally, persons in a space may also be motivated to be (more) quiet when sound passes a certain threshold. When one or more sound attenuating panels are applied that comprise controllable sound attenuating properties, sound may also be reduced (such as by the control unit as function of the sound sensor signal) in a space or in parts of a space, when considered necessary.

### System general

As indicated above, the system may at least comprise a sound attenuating panel, a control unit and a sound sensor. The system may be a single entity, but may in general include separate components. The control unit and sound sensor are functionally coupled. In case the sound attenuating panel has controllable properties, in general the sound attenuating panel and control unit will also be functionally coupled.

The system, or more precisely the control unit, may be functionally coupled to at least one of a sound attenuating panel that has controllable properties and another device having controllable properties. The system may thus include one or more of a sound attenuating panel (not having controllable properties) and a sound attenuating panel having controllable properties. A sound attenuating panel having controllable properties may e.g. a sound attenuating panel with controllable acoustic properties (herein also called controllable attenuating properties) as described below. Such other device may e.g. a lighting unit, see also below. As will be clear to a person skilled in the art, the system may include one or more sound attenuating panels. The system may also include one or more sound sensors. Of course, the system may also include one or more sound attenuating panels and one or more sound sensors. Hence, in a specific embodiment, the system comprises a plurality of sound attenuating panels, a control unit, and a plurality of sound sensors, wherein the sound sensors are configured to measure sound in a space wherein the sound attenuating panels are applied and wherein the sound sensors are configured to provide corresponding sound sensor signals, wherein the control unit is configured to control a controllable device as function of one or more of the sound sensor signals, wherein the controllable device is selected from the group consisting of one or more of sound attenuating panels having controllable properties and another device having controllable properties. The control unit may also include a plurality of control units, with e.g. local control units and one main control unit, for instance higher in rank than the other control units (and thus able to overrule local control units).

The sound attenuating panel will be arranged in a space. In the space, also the sound sensor is applied. The space may host a plurality of sound sensors and/or a plurality of sound attenuating panels. However, the system may also be able to include sound attenuating panels and sound sensors in a plurality of spaces. The space may for instance be (part of) a hospitality area, such as a restaurant, a hotel, a clinic, or a hospital, an office, a department store, a warehouse, a cinema, a church, a theatre, a library, etc. The sound attenuating panel may divide a space in two or more subspaces, such as (working) cubicles or private parts within a single hospital or nursery home room. The invention may however also be applied in automotive or in (outdoor) building applications, etc. For instance, the panel may also be used in applications wherein aesthetics and (outdoor) sound reduction may be of interest, such as in applications in a city to reduce sound. The lighting function may also be of use, as during the night both light might be desired and an increased sound attenuation may be desired.

### Sound attenuating panel with specific properties

Especially, the sound attenuating panel may have controllable properties. For instance, the sound attenuating panel may comprise a light source (embedded therein) (which light source may be controllable by the control unit). Additionally or alternatively, the sound attenuating panel may also comprise controllable sound attenuating properties. In such embodiments, the control unit will especially be configured to control the sound attenuating properties of such sound attenuating panel (as function of e.g. the sound sensor). Below, some aspects of embodiments of the sound attenuating panel are described, with special attention to controllable (sound attenuating) properties and the integration of a lighting function. However, other functions may be included as well.

As defined above, the invention provides a sound attenuating panel. The panel may for instance be used as room divider or desk divider. Optionally, the panel may also be used as wall panel or ceiling panel. The panel may in principle have any dimension, like e.g. length and height each independently selected from the range of 0.2-50 m, like 0.4-15 m, though smaller or larger dimensions may also be possible. Further, also modular systems may be used which function as one single sound attenuating panel, or which consist of a plurality of sound attenuating panels. Hence, the term "panel" may refer to a plurality of panels. Likewise, the term "sound attenuating unit" (see below) may also relate to a plurality of sound attenuating units. In an embodiment, a panel may comprise a plurality of sound attenuating units. Hence, in operation the panel may be arranged horizontal, vertical or any other arrangement. The panel may be flat, may be curved, etc.

The width of the panel may e.g. be in the range of 1-200 mm, such as 5-100 mm. In general, the length and height is substantially larger than the width. The panel is not necessarily rectangular (or square), but may also have other shapes. The panel may in embodiments especially have a height selected from the range of 140-190 cm, especially 150-185 cm, or selected from the range of 70-125 cm, especially 80-120 cm. The former height may especially be suitable for room dividers (office dividers); the latter height may especially be suitable for desk dividers. However, other dimensions may also be possible. For instance, the width may also be larger than 200 mm. Optionally, also the height and/or length may be larger or smaller.

The term "sound attenuating panel" especially relates to a panel that is able to attenuate or reduce sound. Attenuation of sound can for instance be obtained by e.g. absorbing and/or blocking sound waves that would otherwise propagate from one place, such as one desk to another place, such as another desk. In a specific embodiment, the panel is configured to absorb and/or diffuse sound. Therefore, in an embodiment the panel material (or "sound reducing material" or "attenuating unit material"), i.e. the material comprised by the sound attenuating unit, may comprise a sound absorbing material and/or a sound diffusing material. Hence, the term "attenuating" may include an absolute reduction of the sound, or a blocking, or a reflection, of (part of the sound), such that beyond the panel, the sound is attenuated. The term "panel material" or "sound reducing material" may also relate to a plurality of different materials.

The sound attenuating panel comprises a sound attenuating unit. Especially this unit is the part that may give the panel it sound attenuating property. At least this unit comprises panel material or sound attenuating material.

In an embodiment, the sound attenuating panel comprises (a) a sound attenuating unit with cavities with variable dimensions and (b) an infrastructure for controlling the dimensions of the cavities in the sound attenuating unit. With such sound attenuating panel, the acoustic properties of a panel in a space can be controlled (with the control unit). Hence, with such unit, during use the sound attenuating properties may be adjusted (by one or more of a user or automatically (such as as function of a sensor signal, especially the sound sensor signal, see also below). In addition to the sound attenuating unit, the panel may also comprise an infrastructure for controlling the sound attenuation properties (of such sound attenuating panel having controllable sound attenuating properties). This infrastructure may for instance comprise one or more actuators, a control unit, a user interface, etc. In general, this infrastructure will be integrated in the panel. The infrastructure will in general comprise electronic elements, like an electronic actuator for applying a force to the attenuating unit. This may a pulling force a pressing force, etc. Herein, the term "actuator" may also relate to a plurality of actuators. Other options are also possible, see also below. Further, other elements may be present in the panel as well, see also below. Especially, the infrastructure comprises a device for applying a force to at least part of the sound attenuating unit. Such force may be an electromagnetic force, a friction force, a tension force, an elastic force, etc. A combination of two or more forces may also be applied.

The sound attenuating properties may be controlled by the fact that the sound attenuating unit comprises cavities with variable dimensions. Hence, the panel material comprised by the sound attenuating unit comprises cavities with variable dimensions. By varying these dimensions, also the sound attenuating properties may be varied. In general, the panel can be brought in a first (acoustic) state wherein the sound attenuating properties are maximum (most sound reduction / absorption) and in a second (acoustic) state wherein the attenuating properties are minimum. Especially, the panel, more especially the sound attenuating unit and the infrastructure may be configured to provide are range of configurations between the first state and the second state.

In an embodiment, control of the panel may be done via a user interface. This user interface may be integrated in the panel or may be arranged remote. For instance, the user interface may be also be provided as application on a computer, laptop, a cell phone, a personal digital assistant (PDA), a Smartphone, a tablet, an ultra book, and a device integrated into personal wearing. For instance, via a graphical user interface the panel may be controlled. However, control of the panel may also be executed in other ways. For instance, the control unit may control the panel, for instance based on one or more of predetermined settings, sensor signals, and remote control commands. For instance, predetermined settings may relate to time dependent settings. Based on empirical and/or historical data, the panel may be set in the desired attenuation state. However, based on a sensor signal (see also below), like a sound level sensor, the panel may also be set to a specific attenuation state. Hence, in an embodiment the control unit is configured to control the controllable device as function of historical sound data.

In a specific embodiment, the sound attenuating unit comprises a fibrous material (as panel material or sound attenuating material) with spaces between adjacent fibers. In such embodiment, the infrastructure for controlling the dimensions of the cavities may especially comprises a device for applying a force to the fibrous material. In an embodiment, the sound attenuation unit comprises a plurality of (adjacent) layers of fibrous material. In a specific embodiment, two or more of these may be controlled individually. The infrastructure may, not only in this embodiment but also in other embodiments, also be configured to provide different forces, such as forces in different directions, to the panel material, in this embodiment the fibrous material. An example of a fibrous material is especially a textile.

In another specific embodiment, the sound attenuating unit comprises a deformable porous material (as panel material or sound attenuating material) with pores. In such embodiment, the infrastructure for controlling the dimensions of the cavities may (also) especially comprise a device for applying a force to the deformable porous material. An example of porous material is especially a polymer foam or a silicone membrane or a 3D textile, etc..

In another specific embodiment, the deformable porous material comprises a stimuli-responsive polymer. Such stimuli-responsive polymer may e.g. especially be able to contract or extend under influence of a potential difference. Such polymers are also known as "smart" polymers. They are considered to be high-performance polymers that change according to the environment they are in or according to stimuli provided to the polymer. Such materials can be sensitive to a number of factors, such as temperature, humidity, pH, the intensity of light or an electrical or magnetic field and can respond in various ways, like altering transparency and/or (also) sound attenuating properties. Due to an action of the infrastructure, such as applying an electrical potential to the polymers, the polymers may for open or closed structures, and thereby provide cavities or (partly) close cavities. In an embodiment, the infrastructure for controlling the dimensions of the cavities (or pores) may (also) especially comprise device comprising a source of electrical energy.

In another specific embodiment, the sound attenuating unit comprises two or more panels, arranged parallel and adjacent to each other, each panel comprising holes, wherein the two or more panels are arrangeable in a set of configurations comprising at least a first configuration and a second configuration with different sound attenuations. For instance one may imagine a configuration wherein the holes (of both panels) substantially overlap, leading to low(er) sound attenuation properties, and a configuration wherein the holes (of both panels) do not substantially overlap, leading to stronger sound attenuation properties. In such embodiment, the infrastructure for controlling the dimensions of the cavities may especially comprises a device for arranging the two or more panels in at least two different (sound attenuating level) configurations. In a first configuration, the holes may be through holes, and in a second configuration the holes are partly through holes are blocked. Hence, in a first configuration, the length of the (through) holes is the length of holes in the two or more panels, whereas in another configuration, especially in a block configuration, this length is different, e.g. only of a hole in one of the plates. In the second configuration, the holes can also be seen to be distorted relative to a configuration wherein a though hole is available through the two or more plates. Hence, the cavities (i.e. here a through hole of a configuration wherein there is a through hole through two or more plates) have variable dimensions. In such sound attenuating unit comprising two or more panels, with each panel comprising holes, the panes are especially arranged parallel. The distance between the panels may be very small, such as 0.1-5 mm.

Hence, the panel comprises cavities with variable dimension. These cavities may also be indicated as voids, such as pores in a foam, channels in a material, spaces between fibers, etc.

In an embodiment, the sound attenuating unit comprises a light transmissive unit part comprising a material that is transmissive for visible light, such as being translucent or transparent. Especially, the sound attenuating unit comprises (thus) a transparent unit part comprising a material that is transparent for visible light (herein also indicated as "transparent material"). Especially this transparent unit part is configured to allow transmission of light from one face to another face of the panel. Hence, one may be able to look to at least part of the panel (by looking through the (light) transparent unit part comprising the material that is transparent for visible light). Herein, light especially relates to visible light. The transparent unit part is thus especially transparent for visible light, and may - in operation - be used to look through the sound attenuating panel (however, see also below).

Hence, in a specific embodiment, the sound attenuating panel (further) comprises a light source that is configured to provide light into the transmissive unit part, especially a transparent unit part, wherein the (transparent) unit part has light guiding properties and wherein the transparent unit part is configured to allow transmission of visible light from a first face of the sound attenuating panel to a second face, and wherein the (transparent) unit part and light source are configured (to be able) to provide light escaping to at least one of the faces of the sound attenuating panel.

Especially, the (transparent) unit part and light source are configured (to be able) to provide light escaping to both faces of the sound attenuating panel. As will be indicated below, in specific embodiment the sound attenuating unit material or panel material comprises such material that is transmissive, especially transparent, for visible light.

Hence, in an embodiment the panel material is material that is transparent for visible light, or one or more parts of the sound attenuating unit comprises such material that is transparent for visible light (i.e. part of the attenuating unit comprises the transparent unit part). Hence, in embodiments the sound attenuating unit comprises the material that is transparent for visible light. Therefore, in a specific embodiment the sound attenuating unit comprises sound attenuating material, wherein the sound attenuating material comprises said material that is transparent for visible light.

The transparent unit part may especially comprise outcoupling structures, at an exit surface, and/or embedded in the material that is transparent for visible light. Herein, the material that is transparent for visible light is also indicated as transparent material. This light can be used to assist a person in doing activities and/or in generating a specific atmosphere, and/or can be used to crate privacy. When the light of the light source is coupled into the unit part, light will be coupled out from the transparent unit part. In this way, the perceived transparency is reduced, as a spectator will now not see, or see less, objects behind the transparent unit part, but will see the light coupled out in the direction of (amongst others) the spectator. The fact that a spectator will especially see the light and not an object behind the transparent unit, while the transparency may not really be affected, is indicated as (reduction of) perceived transparency. Hence, in a specific embodiment, the invention also provides a system wherein sound attenuating panel comprises a sound attenuating unit, wherein the sound attenuating unit comprises a transparent unit part comprising a material that is transparent for visible light, wherein the sound attenuating panel further comprises a light source that is configured to provide light into the transparent unit part, wherein the transparent unit part has light guiding properties and wherein the transparent unit part is configured to allow transmission of visible light from a first face of the sound attenuating panel to a second face, and wherein the transparent unit part and light source are configured (to be able) to provide light escaping to both faces of the sound attenuating panel.

Above, the principle of controlling the sound attenuating properties is described. Amongst others, this above principle is applied in this invention, optional also in combination with lighting properties, as for instance the acoustic material may also have light guiding properties (wave guiding properties). Hence, the principle of controlling acoustic properties by modulating cavities (like spaces, holes, pores, etc.) in a material may also be applied to a light divider concept to improve its acoustic properties since it is currently made from a hard polymer or glass like material into which light is coupled. Once the light has been coupled into the material the users will find it harder to see through the divider, thus enhancing the feeling of privacy. When the user turns on the light to increase the feeling of privacy, the absorption of sound should also increase since it is most likely that the user desires to work in a quiet context. At this point, the sound absorbing material / screens that may be located in the area or on the light dividing screens could change shape to absorb more of the sound. When the user turns off the light, the transparent part of the panel may also be perceived as transparent (as the light is not changing the perception anymore) and so the user or other people can see through the transparent part. At both faces of the acoustic panel, they can see each other and perhaps once they begin to talk. The sound absorbing material may be flexed to open up the fibers or openings to enable the passage of sound and ease conversation.

### Light source

Herein, several types of light sources may be applied. In embodiments, a light source can be part of the sound attenuating panel. However, alternatively or additionally also one or more external light sources may be applied. In a specific embodiment, the light source comprises a solid state LED light source (such as a LED or laser diode). Especially, when a light source is part of the sound attenuating panel, the light source comprises a LED light source ("LED"). The term "light source" may also relate to a plurality of light sources, such as 2-20 (solid state) LED light sources. However, more light sources may of course also be applied. Hence, the term LED may also refer to a plurality of LEDs. The terms "visible", "visible light" or "visible emission" refer to light having a wavelength in the range of about 380-750 nm.

The light source may especially be configured to generate white light. The term white light herein, is known to the person skilled in the art. It especially relates to light having a correlated color temperature (CCT) between about 2000 and 20000 K, especially 2700-20000 K, for general lighting especially in the range of about 2700 K and 6500 K, and for backlighting purposes especially in the range of about 7000 K and 20000 K, and especially within about 15 SDCM (standard deviation of color matching) from the BBL (black body locus), especially within about 10 SDCM from the BBL, even more especially within about 5 SDCM from the BBL.

When a light source is comprised by the system (such as either associated to the sound attenuating panel or remote thereof), such light source is considered controllable (by the control unit).

### Sensor(s)

The system at least comprises a sound sensor. Especially the (sound) sensor comprises one or more of a microphone and a sound pressure sensor. Hence, in a further specific embodiment, the sensor comprises a sound sensor configured to measure sound in a space wherein the sound attenuating panel is applied, configured to provide a corresponding sound sensor signal. Assuming a sound attenuating panel with controllable sound attenuation properties, the sound attenuation properties of the sound attenuating panel and/or optionally controllable properties of the optional other device may be controlled as function of the sound sensor signal. The term "sound sensor", as also indicated above, may also relate to a plurality of sound sensors.

The system may in addition to the sound sensor(s) also include (an)other sensor(s). Hence, the controllable items included in the system may also be controlled as function of a signal of another sensor. The (other) sensor may be any sensor, such as selected from one or more of environmental condition sensors, such as thermally sensitive (e.g., temperature, infrared) sensors, humidity sensors, motion sensors, photo sensors / light sensors (e.g., photodiodes, sensors that are sensitive to one or more particular spectra of electromagnetic radiation such as spectro radiometers or spectro photometers, etc.), various types of cameras, sound or vibration sensors or other pressure / force transducers (e.g., microphones, piezoelectric devices), and the like. Hence, especially the other sensor may be selected from the group consisting of an environmental condition sensor, a motion sensor, a light sensor, a camera, and a vibration sensor.

The sound sensor and/or the optional other sensor can each independently be integrated in the sound attenuating panel. However, one or more can be integrated in the sound attenuating panel and one or more can be arranged elsewhere in the space wherein the sound attenuating panel is applied. Also all sensors can be external from the sound attenuating panel.

Based on the sensor(s), controllable items can be controlled, such as a sound attenuating panel with controllable sound attenuating properties, e.g. based on predetermined preferences. Hence, in a specific embodiment, the sound attenuating panel has controllable sound attenuation properties and the control unit is configured to control the sound attenuating properties as function of one or more of the sound sensor signal and a signal of another sensor, wherein the sound sensor comprises one or more of a microphone and a sound pressure sensor, and wherein the other sensor is selected from the group consisting of an environmental condition sensor, a motion sensor, a light sensor, a camera, and a vibration sensor.

With the sound attenuating panel and system as described herein the acoustic environment, in e.g. open areas, can be improved. Further, optionally also visual privacy, for for instance people working in an open space, may be improved (see also below). Advantageously, the attenuating properties may be controlled, e.g. by the user of the panel, or via a remote system. Optionally, via in intuitive way both visual and sound privacy may be controlled with the panel. For instance, now a desk divider can be provided that could adapt its functioning to better suit the needs of the office worker is desirable to enhance satisfaction with the work environment and possibly even productivity.

Especially, efficient sound absorbing material may be porous. This means that they consist of cavities into which the sound waves can pass and dissipate their sound energy as vibrations in the material and is thus released as heat. These types of material therefore reflect very little of the sound that comes in contact with them. Especially, different types of pores can (within the same material) can be useful. Closed pores are like bubbles in a material and while helping to reduce the mass of the material they may be less efficient at absorbing sound. Blind pores are like long caves in a rock face. Sound waves can pass into the blind pore and may be absorbed. A pore can also be tunnel like where the depth is the same as the thickness of the material, thus the sound could potentially pass thorough the material entirely. A general definition of a porous material is that the pores (holes, caves or tunnels) must be deeper than they are wide.

Sound absorbing porous materials may be based on a fibrous structure (e.g. textile). Other types may include cellular (e.g. foamed materials) or granular (e.g. sands, concretes). An advantage of the fibrous textiles is that they can be stretched and thus their physical form can be altered; this in turn will alter their sound absorbing properties. Assuming a fibrous material, like textile, when pulled in one or more directions the space between the fibers increases and the sound absorption ability may reduce. The same may be true for a (cellular) material with holes (tunnels) cut into it. When pulled in one direction the holes will stretch and this will allow more sound to pass through.

### Other elements

Further elements that may be part of the system, such as embedded in the sound attenuating panel or arranged somewhere in a space wherein the sound attenuating panel may be arranged are e.g. light sources.

As indicated above, one embodiment of such further element is a light source embedded in the sound attenuating panel. In a specific embodiment, this light source may be configured to couple light into a transparent part. Especially, this transparent part may also have sound attenuating properties (see above). However, additionally or alternatively also one or more light sources may be included in the system that are not part of the sound attenuating panel, but are e.g. arranged to a wall or ceiling of the space. Hence, a light source not embedded in the sound attenuating panel may be available and/or a sound attenuating panel with a light source embedded therein may be available. Such light source, whether embedded or not, may especially be controllable, i.e. may be controllable by the control unit (see also above). A sound attenuating panel with a light source may (thus) especially qualify as sound attenuating panel having controllable properties and a light source not embedded in the sound attenuating panel may thus especially qualify as other device having controllable properties. Both can be controlled as function of one or more sensor signals, especially as function of at least the sound sensor signal. For instance, quiet space may receive more light, and less quiet space may receive less light.

Additionally or alternatively, the system may also include one or more of a speaker and a microphone. The term "speaker" may also relate to a plurality of speakers; the term "microphone" may also relate to a plurality of microphones. Speakers may be used to convey messages. In specific embodiments, a sound attenuating panel may include a speaker and a microphone, and especially both faces of the sound attenuating panel may (each) comprise a speaker and a microphone. Hereby, communication between both faces of the panel may be improved. Thereby, persons at both faces of the panel do not have to speak up and sound can be reduced. Hence, in an embodiment one or more of the sound sensor and a speaker are integrated in the sound attenuating panel, wherein the sound sensor comprises a microphone. Especially both may be integrated in the sound attenuating panel. The term "integrated" may especially relate to a physical coupling of parts.

The system may also include a signal unit. This signal unit may be used to warn people when the sound level is considered unacceptable. This signal unit may also be used to guide people to quiet subspaces or to meeting subspaces. Hence, in principle the signal unit may be configured to provide any type of information, in words, colors, symbols, etc. etc. therefore, in an embodiment, the system further comprising a signal unit configured to indicate a sound level as function of the sound sensor signal. The term "sound level" may relate to one or more of a qualitative or quantiative qualifification. It can be, dependent upon the situation and/or arrangement a "noise level" or a "quietness level". The term "signal" unit may also refer to a plurlaity of signal units. The signal unit may in an embodiment be integrated in the sound attenuating panel. Alternatively or additionally, such signal unit may be remote from the sound attenuating panel.

### Control unit and control

Above, control of the panel is described. In embodiments, the sound attenuating panel, when having controllable properties, may be controlled by a user interface that may be integrated in the sound attenuating panel or a remote user interface may be applied. Note that a user interface may also be integrated in the sound attenuating panel even when the sound attenuating panel has not controllable properties, as the control unit may also be configured to control another device.

The control unit may include a user interface. Such user interface may be integrated in the control unit or may be remote (optionally wireless). The user interface may also include a plurality of user interfaces, with e.g. local user interfaces and one main user interface. The latter may e.g. be functionally coupled to the control unit or a control unit, for instance higher in rank than the other control units (and thus able to overrule local control units).

Hence, the system may further comprise one or more of a user interface integrated in the sound attenuating panel and a remote user interface. In addition or (even) alternative to a local control of controllable elements, the control may be elsewhere, in a remote control unit. Hence, in embodiments, a user in the space or at a sound attenuating panel may not be able to control controllable devices of the system, but control is done elsewhere via the control unit of the system. For instance, predetermined settings may then control the controllable devices in the space. However, also a combination of local control by a user and control by a remote control unit can be applied. A user interface can be applied to provide commands to the control unit.

Hence, with the present invention it is also possible to intuitively control the sound and privacy properties. Either set by the user or via other options, when there is a desire to concentrate on an action, light may be switched on, which may assist in performing the action, and at the same time this improves privacy. Further, also the sound attenuating properties may increase, also enhancing privacy and the ability to concentrate on the action. A control unit may control the light source and the sound attenuating properties, which may in specific embodiments especially be coupled, in the sense that transparency of the light transmissive material is related to the sound attenuating properties of the (same) material.

Further, especially the control unit is configured to control a device as function of a sensor signal of the sensor, wherein the device is selected from the group consisting of the sound attenuating unit (especially a sound attenuating panel having controllable sound attenuating properties), a light source and another device. The control unit may for instance control based on predetermined settings, by which a panel may become a smart or intelligent panel. For instance, it may be sensed that a person is working of making a telephone call, which may lead to a corresponding privacy and/or sound attenuating setting. When however people are communicating with each other but located at both faces of the panel, the privacy and/or attenuating settings may be adapted to facilitate communication.

In a further aspect, the invention also provides a system comprising the sound attenuating panel, such as described herein, a control unit, and a sensor, wherein the control unit is configured to control a device as function of a sensor signal from the sensor, wherein the device is selected from the group consisting of the sound attenuating panel (especially a sound attenuating panel having controllable sound attenuating properties) and another device. Such system may comprise a plurality of panels and one or more control units. One control unit may control all panels. However, in embodiments, each panel comprises its own control unit (whether or not a controlled remote). In a specific embodiment, each panel comprises a control unit, but the system also comprises a main control unit, higher in rank than the local control units of each panel.

In a further aspect, the invention provides a system comprising a sound attenuating panel (especially a sound attenuating panel having controllable sound attenuating properties), a control unit, and a sound sensor, wherein the sound sensor is configured to measure sound in a space wherein the sound attenuating panel is applied and is configured to provide a corresponding sound sensor signal, wherein the control unit is configured to control a device as function of the sound sensor signal, wherein the device is selected from the group consisting of the sound attenuating panel and another device.

Hence, in a specific embodiment, the control unit is configured to control the device as function of the sound sensor signal, wherein the device is selected from the group consisting of (i) a light source not embedded in the sound attenuating panel, (ii) a sound attenuating panel with a light source embedded therein, (iii) a sound attenuating panel having controllable sound attenuation properties, (iv) a speaker, (v) a microphone, and (vi) a signal unit.

The invention thus allows influencing human behavior, for instance by providing information, by promoting quiet behavior, by assisting in concentrated working, etc. etc. Hence, in an embodiment the control unit is configured to control the controllable device to assist a human in performing an activity as function of the sound sensor signal, based on a predetermined relation between the sound sensor signal and one or more controllable features of the controllable device. Therefore, in a further aspect the invention also provides a method to assist a human in performing an activity, the method comprising using the system as described herein, and controlling with the control unit one or more settings of the controllable device as function of the sound sensor signal, wherein the controllable device is selected from a group consisting of (i) a light source not embedded in the sound attenuating panel, (ii) a sound attenuating panel with a light source embedded therein, (iii) a sound attenuating panel having controllable sound attenuation properties, (iv) a speaker, (v) a microphone, and (vi) a signal unit. Especially, the controllable device is configured to execute on instruction of the control unit one or more actions selected from the group consisting of (i) changing settings of a light source, (ii) changing acoustic properties of the sound attenuating panel, (iii) changing settings of a speaker, (v) changing settings of a microphone, and (vi) providing information with a signal unit.

As indicated above, in a further aspect, the invention also provides a sound attenuating panel, comprising a light source that is configured to provide light into a transparent unit part, wherein the transparent unit part has light guiding properties and wherein the transparent unit part is configured to allow transmission of visible light from a first face of the sound attenuating panel to a second face, and wherein the transparent unit part and light source are configured (to be able) to provide light escaping to at least one of the faces (of the sound attenuating panel), wherein the sound attenuating panel further comprises a control unit configured to control a controllable device as function of a sound sensor signal of a sound sensor, wherein the controllable device is selected from the group consisting of a sound attenuating panel having controllable properties (especially a sound attenuating panel having controllable sound attenuating properties) and another device having controllable properties. Especially, the sound attenuating panel may further comprise a sound sensor configured to provide a sound sensor signal, wherein the sound sensor comprises one or more of a microphone and a sound pressure sensor.

The term "substantially" herein, such as in "substantially all light" or in "substantially consists", will be understood by the person skilled in the art. The term "substantially" may also include embodiments with "entirely", "completely", "all", etc. Hence, in embodiments the adjective substantially may also be removed. Where applicable, the term "substantially" may also relate to 90% or higher, such as 95% or higher, especially 99% or higher, even more especially 99.5% or higher, including 100%. The term "comprise" includes also embodiments wherein the term "comprises" means "consists of". The term "and/or" especially relates to one or more of the items mentioned before and after "and/or". For instance, a phrase "item 1 and/or item 2" and similar phrases may relate to one or more of item 1 and item 2. The term "comprising" may in an embodiment refer to "consisting of" but may in another embodiment also refer to "containing at least the defined species and optionally one or more other species".

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices herein are amongst others described during operation. As will be clear to the person skilled in the art, the invention is not limited to methods of operation or devices in operation.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

The invention further applies to a device comprising one or more of the characterizing features described in the description and/or shown in the attached drawings. The invention further pertains to a method or process comprising one or more of the characterising features described in the description and/or shown in the attached drawings.

The various aspects discussed in this patent can be combined in order to provide additional advantages. Furthermore, some of the features can form the basis for one or more divisional applications.

### BRIEF DESCRIPTION OF THE DRAWINGS

Embodiments of the invention will now be described, by way of example only, with reference to the accompanying schematic drawings in which corresponding reference symbols indicate corresponding parts, and in which:
Figs. 1a-1b schematically depict some general principles;
Figs. 2a-2f schematically depict some embodiment of the sound attenuating panel; and
Figs. 3a-3b schematically depict a further embodiments.
The drawings are not necessarily on scale.

### DETAILED DESCRIPTION OF THE EMBODIMENTS

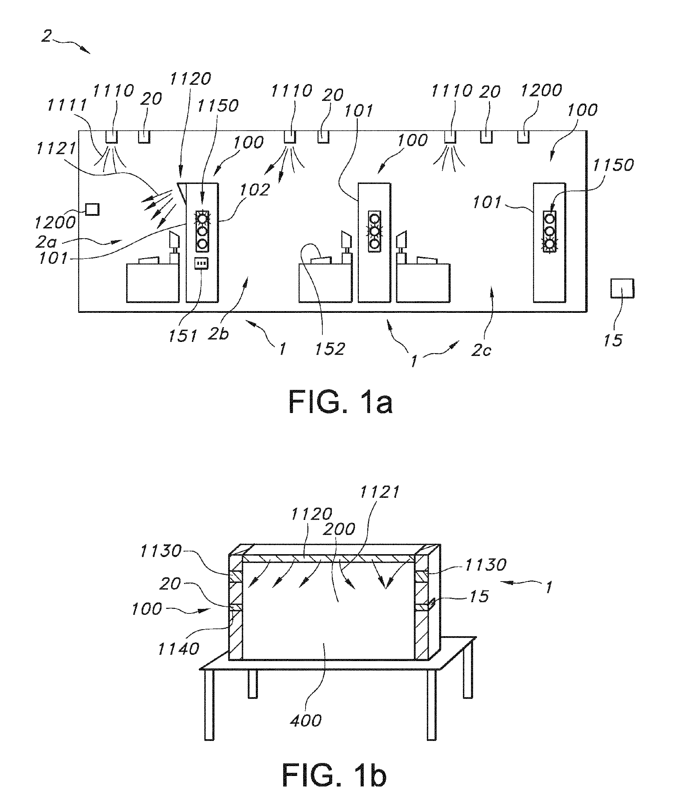

Fig. 1a schematically depicts a system 1 comprising the sound attenuating panel 100 as described herein, a control unit 15, and a sensor 20. The control unit 15 may be configured to control a device as function of a sensor signal from the sensor, wherein the device is selected from the group consisting of the sound attenuating panel 100 and another device, such as the further lighting in a space 2, wherein the panel(s) 100 are arranged. Optionally, the control unit may be configured to control one or more of the sound attenuating panels 100 and other device locally. Hence, in such way e.g. sound and or light can be controlled locally, such as indicated with subspaces 2a,2b,2c (which may e.g. cubicles). For instance, the sensor 200 comprises a sound sensor configured to measure sound in a space wherein the sound attenuating panel 100 is applied, configured to provide a corresponding sound sensor signal, wherein the sound attenuation properties of the sound attenuating panel 100 and optionally properties of the optional other device are controlled as function of the sound sensor signal.

Fig. 1a further schematically depicts one or more additional light sources. Light sources 1120 are light sources embedded in the sound attenuating panel. These light sources provide light 1121. Further light sources external from the sound attenuating panel may also be available in the space 2; these light sources are indicated as light sources 1110, which may provide light 1111. Reference 1200 indicates further sensors, such as a light, a temperature, a motion, sensor, etc. reference 1150 indicates a signal unit. By way of example, an embodiment of a signal unit 1150 is chosen which may indicate by colors, like a type of traffic light, whether it is (too noisy), moderate noisy or quiet (relating to sub spaces 2a, 2b and 2c, respectively). Reference 151 indicates a user interface that is integrated in the sound attenuating panel 100, e.g. to switch on a light source or to change attenuation properties, or any other controllable property of any device functionally coupled to such user interface; reference 152 indicates a remote interface, like a keyboard, smart phone, etc. etc. optionally, the control unit 15 may overrule local user inputs.

Fig. 1b schematically depicts an embodiment wherein the sound attenuating panel 100 further comprises a sensor 20 and a control unit 15. For instance, the control unit 15 may be configured to control a device as function of a sensor signal of the sensor 20, wherein the device is selected from the group consisting of the sound attenuating unit 200, the light source (not depicted, but see elsewhere) and another device (not depicted, but one may consider e.g. (other) lighting in a room where the panel 100 is present, an audio device, a video device, etc.). For instance, the sensor 20 may comprise one or more of a microphone and a sound pressure sensor. Note that the control unit 15 may be configured to be (further) controlled by another electronic device, like a computer, laptop, Smartphone, etc. By way of example, the sound attenuating panel 100 schematically depicted in fig. 1b further comprises a speaker 1130 and a microphone 1140. These may e.g. be used to communicate with a person at the other face of the sound attenuating panel 100 (especially assuming that also at that face a microphone and speaker are available). The control unit 15, here embedded in the sound attenuating panel 100, but which may alternatively or additionally also be arranged external, may e.g. configured to control the speaker, microphone, light source 1120, etc., e.g. as function of the sound sensor signal (here microphone sensor signal).

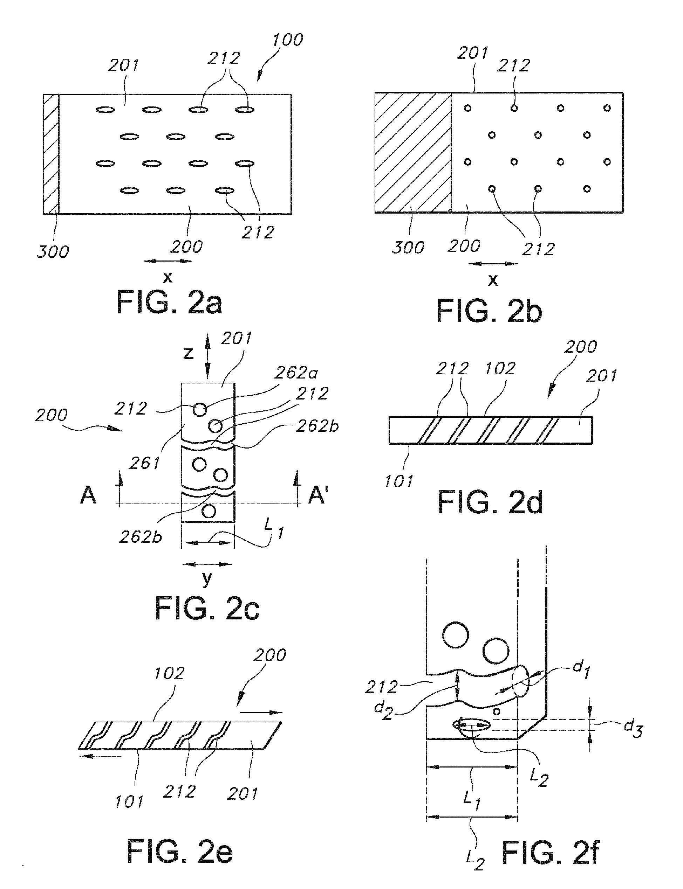

Figs. 2a-2b very schematically depict an embodiment of the sound attenuating panel. The panel is indicated with reference 100. The sound attenuating panel 100 comprises (a) a sound attenuating unit 200 with cavities 212 with variable dimensions and (b) an infrastructure 300 for controlling the dimensions of the cavities 212 in the sound attenuating unit 200. The infrastructure can e.g. comprises an actuator configured to stretch (and/) or press the panel material, indicated with reference 201. Fig. 2a schematically shows a stretched (or relaxed) configuration and fig. 2b may for instance show a relaxed (or respectively pressed). The former configuration may have less sound attenuating properties, and the latter configuration, in fig. 2b, may have better sound attenuating properties. The panel material 201 may for instance be a cellular material with holes (tunnels) cut into it. When pulled in one direction the holes will stretch and this will allow more sound to pass through. The arrow with the indication "x" indicates that (amongst others) a movement, such as by pressing or pulling, in the x direction may lead to different dimensions of the cavities 212 and thereby in the attenuating properties of the panel 100.

The sound attenuating unit comprises sound attenuating material with controllable sound attenuating properties, but may also have wave guiding properties, thereby allowing to combine in the sound attenuating unit 200 both sound attenuating properties and optical properties (see also below).

Fig. 2c schematically depicts an embodiment with examples of cavities. The panel material 201 may comprises cavities 212 in the form of holes or spaces, which are also indicated with reference 262a. These cavities are no through cavities, with dimensions in general shorter than the width of the sound attenuating unit 200. The width of the unit is indicated with reference L1. Additionally or alternatively, the cavities 212 may also include pores or through holes, of which the lengths may be equal to the width L1 of the unit 200. Here, the panel material 201 is a porous material 261. Blind pores may also be present, but are not depicted in this schematic drawing. A cross-sectional view along line AA' is shown in fig. 2f. Actions to control sound attenuating properties may be by applying a force in the x (see also figs. 1a-1b), y and z direction, such as by pressure or by pulling, or twisting, or shearing, a combination of two or more of such actions, etc.

Figs. 2d and 2e shows another option, wherein use is made of a twisting / shear method for distorting the pores (along an axis). This may enable the sound absorbing material to switch from having tunnel pores, useful for when having a conversation, to blind pores which will block the sound more effectively when wanting to concentrate. The arrows indicate the twisting or shear direction that may for instance be possible. Other options may of course also be possible. References 101 and 102 indicate a first face and a second face of the panel 200, respectively.

Fig. 2f schematically depicts a cross-sectional view along line AA' in fig. 2c, to which also some 3D aspect is added. Here dimensions of cavities 212 are indicated, such as diameter d1 or widths and height, indicated with d2 and d3, respectively, and the length 12. Any change of one or more of those dimensions may lead to different acoustic properties, and thus different sound attenuating properties.

As indicated above, acoustic properties and lighting functionalities can both be included in the sound attenuating panel as described herein. The simplest embodiment is to have a window area for the light dividing element and the rest can be the active sound absorbing material. This material can be stretched or compressed by actuators or pulleys (e.g.) to open the pores or close them depending on the desired acoustic function. For example, if people want a setting for concentrated work, the lights will switch on to create visual privacy and the pores will open to absorb sound.

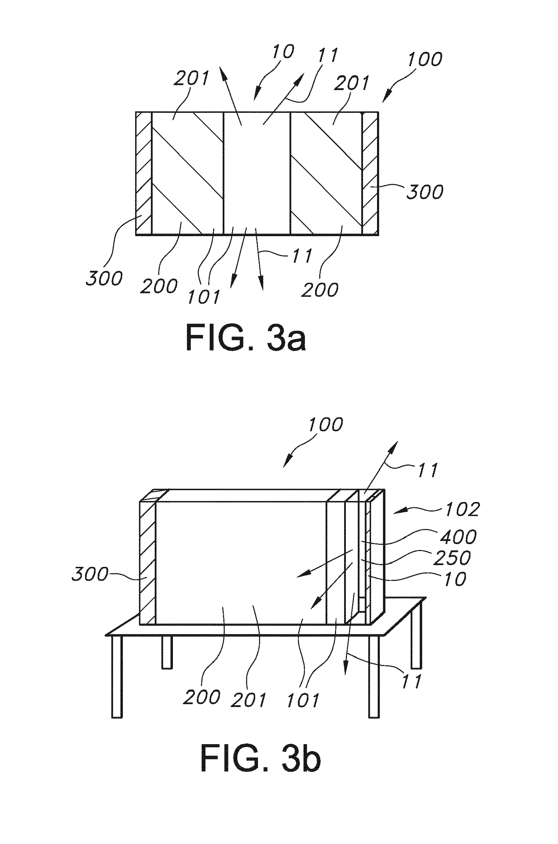

Figs. 3a-3b schematically depict several embodiments. In fig. 3a, the panel 100 comprises a light source 10, as well as the sound attenuating unit 200, which by way of example consists of two parts, arranged by way of example at both faces of the light source 10. The light source 10 may generate light source light 11. Fig. 3b schematically depicts an embodiment of the panel 100 which further comprises a transparent unit part 400. This transparent unit part 400 comprises transparent material 250. As schematically depicted, a spectator can see through the panel. The panel 100 also comprises a light source 10, which is configured to couple light source light 11 into the transparent unit 400. Thereby, light source light 11 can escape to one or both faces 101/102 of the panel, dependent upon how the transparent unit is configured. Especially, the transparent unit 400 is configured to couple light source light 11 out to both faces of the panel. Hence, fig. 3b schematically depicts an embodiment of the sound attenuating panel 100, wherein the sound attenuating panel 100 comprises light source 10 that is configured to provide light 11 into the transparent unit part 400, wherein the transparent unit part 400 has light guiding properties and wherein the transparent unit part 400 is configured to allow transmission of visible light from a first face 101 of the sound attenuating panel 100 to a second face 102 (and here also vice versa), and wherein the transparent unit part 400 and light source 10 are configured (to be able) to provide light 12 escaping to at least one of the faces 101,102 of the sound attenuating panel 100.

Note that in the schematic drawing of fig. 3b the transparent unit part 400 and the sound attenuating unit 200 are depicted as separate units, wherein the panel material of the sound attenuating unit 200 may especially comprise (controllable) attenuating properties and the material of the transparent unit 400, the transparent material 250, may (thus) especially comprise light transmissive properties. However, in an embodiment a single material may have both properties thereby allowing to combine in the sound attenuating unit 200 both sound attenuating properties and optical properties. Hence, in embodiments schematically depicted in the drawings, the panel material may comprise or consist of the transparent material 250. Therefore, in a specific embodiment, the transparent unit 400 and the sound attenuating unit 200 may be a single unit having both acoustic and optical properties, which may be correlated (such as when light on, attenuation goes up).

Some sound absorbing materials are transparent or semi-transparent and it may be possible to conduct light through them. Alternatively, a (normal) surface with holes in it could slide over an identical or similar surface to open or close the holes. When the light is on, the holes will be misaligned and little noise will pass through the divider. When the light is off, the holes will align enabling an easier passage for the sound from one face to the next. Since the light can be dimmed, it is therefore possible to 'dim' the level of sound absorption depending on how open or closed the pores are set.

Alternatively, a structure could be made from a mesh of polymer with reactive polymers on the inside jointing them together. When a current is placed over the reactive polymer they can contract thus pulling parts of the two walls closer together in places to form deeper pores in which the sound can become trapped, thus increasing the sound absorbance level Light can be coupled in the faces or bottom of such a material and if the inside of the material is semi reflective, light can be trapped inside, thus increasing the degree of opacity.

This invention describes amongst others a desk/room divider that combines visual and acoustic adaptability to better suit demands of modem office environments, in essence this invention adds 'visual and acoustic dimming ' to desk/room dividers. Amongst others, the invention describes a (vertical) screen such as a desk divider or room divider that can switch from an optically (nearly) transparent surface to a light-emitting (nearly) opaque-like surface and methods to control the light output. This is in conjunction with an adaptive sound absorption system that can reduce the sound level in an area or 'open' up to allow the sound to pass through to facilitate conversation between office workers. The invention also describes a (vertical) screen, such as a desk divider or room divider, including an adaptive sound absorption system that can reduce the sound level in an area or 'open' up to allow the sound to pass through to facilitate conversation between office workers optionally in conjunction with the functionality of switchability from an optically (nearly) transparent surface to a light-emitting (nearly) opaque-like surface (and methods to control the light output).

Advantageously, the invention proposes measures that can improve the sounds cape (sound landscape) in e.g. open plan offices, for instance by integrating environmental sensing/actuating into desk/room dividers. This invention also proposes a solution for sensing and managing sounds cape in e.g. open plan offices. In an embodiment, this may amongst others be achieved by integrating appropriate sensors (e.g. sound pressure level sensors, microphones) and actuators (e.g. lighting, speakers) into desk/room dividers. In addition, connecting desk/room dividers (e.g. by wireless communication / power line) allows spreading and sharing the information gathered about noisiness status and levels among different areas within the office. The sensed information can be used to derive actions (e.g. signaling noisiness to make people talk less, indicate 'quiet' resp. 'noisy' areas, etc.) to positively influence the office's sounds cape. The invention may amongst others lead to one or more of the following advantages: (a) determination of noisiness of desk/areas within office, (b) helping people to make a better choice for current workplace in an office environment (open plan offices) where workplace is chosen according to current needs/preferences, (c) reducing conflicts between people because proper expectation management / subtle hints on effects of their behavior, and (d) helping people to adapt their behavior to have less negative impact on others.

Hence, in an embodiment panels may communicate with each other, and in this way quiet and noisy areas may be detected and/or indicated. Hence, in embodiments, especially wherein a plurality of sound attenuating panels is applied, the sound attenuating panel may be configured to communicate with each other. Hence, the sound attenuating panel may include a communication unit. In general, this will be associated with one or more of a sensor, an electronic device and the control unit. Therefore, in a further aspect, the invention provides a system comprising a sound attenuating panel ("panel")(optionally having controllable properties), a control unit, and a sound sensor, wherein the sound sensor is configured to measure sound in a space wherein the sound attenuating panel is applied and is configured to provide a corresponding sound sensor signal, wherein the control unit is configured to control a controllable device as function of the sound sensor signal, wherein the controllable device is selected from the group consisting of a sound attenuating panel having controllable properties and another device having controllable properties, and wherein the sound attenuating panel comprises a sensor, especially the sound sensor. Such (sound) sensor in the sound attenuating panel is (thus) especially functionally coupled to the control unit.

The invention may e.g. also include a sound pressure level sensor embedded in light divider frame, such as dividers with built-in sound pressure level sensor (microphone, etc.). Further, the noisiness at a desk and/or at a divider may be determined. Further, the invention may e.g. include connected panels and/or communication between dividers. Data from microphones (from adjacent panels) may be used to detect whether people close by are talking to each other (possibly switch surrounding desk dividers to privacy mode). Further, also information from dividers for noise classification can be collected. Communicate of noise levels among dividers in larger area can be used to detect quiet and noisy areas. This may also provide people with information on available desks and their expected properties. The invention may also provide the use of such panels, like desk divider, including lighting functionality to signal noisiness and/or a desired status (privacy; e.g. switch desk divider light accordingly (for privacy)). A color indication of noise level may be used. Further, dynamic fluctuation of light to visualize the noise level as people are talking - e.g. the more it fluctuates the sooner those talking may move to another area - may also be an option. For instance, the SPL/people ratio as noise indication may be applied (SPL = sound pressure level). The system, the panel and the method may be applied to (intuitively) hint people to talk a bit softer. And, as indicated above, the panels, especially desk or room dividers may show the noisiness of an area based on historical data (e.g. collected historical data can be used to predict noisiness of e.g. office areas). Information from the dividers could be sent to office users' personal devices so they can view their noise and activity profiles over time, to see whether they may be a person who is generally noisier than others around them. Noise may not only include speech but also general working noise such as smashing items on the desk, tapping, typing noise etc. etc.

Referring to the above, a controllable light source can be used to illuminate the surface. For example, an LED strip can be mounted at the edge of the optically transparent surface, such that it couples in the light from the faces. The light source can change it output based on a control signal from the control unit. Aspects that can be changed include intensity, colour temperature and colour. The control unit may receive input from a sensor or user control or a combination of sensors and control elements. The unit translate the input signal into light output commands that it sends to the controllable light source. The control unit contains memory (to be able) to store the 'sensor history'. The sensor may receive information from the environment and sends this information to the control unit in case there are relevant changes in the environmental information, e.g. increasing/decreasing noise levels/properties. Different sensors unit can be used in our invention. These sensors can be embedded in the frame of the room or desk divider, but can also be located elsewhere in the environment. In the latter case, the sensors can wirelessly communicate to the control unit of the desk / room divider. Similarly, sensors that collect information about the environment can be used in this invention. Environmental parameters that can be relevant for adapting the room / desk divider output include: ambient colour information, light levels, noise levels, air quality, and temperature. Other environmental parameters can be envisioned to be relevant as well. Again, these environmental sensors can be physically integrated into the desk/room divider or work remotely. The user control acts upon a user input action by sending a signal to the control unit. This user control can be a push button on the desk / room divider frame, a remote control, a smartphone app, a software program on a pc, or any other type of personal control device. Actions that a user can perform with the control elements include switching on and off, dimming, and changing the colour. Part of the desk/room divider that can be used to indicate noisiness of an area, e.g. on a scale red (very noisy) - orange (starting to get noisy) - green (quiet). This area can also be used to give hints to the people so that they can adjust their behaviour. Additionally, the desk/room divider could be equipped with a wireless communication interface (e.g. Zigbee, Bluetooth, Coded Light...) to allow spreading of context information on a larger scale, so that noisier and quieter areas can be detected and managed much easier. This information could also be combined with a desk selection system where people are able to choose a desk according to their personal or current preferences.

In a specific embodiment, one may made use of an adapting display in message unit to indicate noise level / give hints. The light output of the desk divider will be adapted based on the ambient noise level. Part of the desk/room divider that can be used to indicate noisiness of an area, e.g. on a scale red (very noisy) - orange (starting to get noisy) - green (quiet). This area can also be used to give hints to the people so that they can adjust their behaviour. The control unit of the desk divider receives the ambient noise information from a noisiness sensor mounted on the frame. The system response to the ambient noise levels can be configured in various ways. The light output could be adapted instantaneously so it reflects the actual noise level. In this case, the light output gives direct feedback on the noise level and might trigger the persons close to this desk divider to lower their voice. However, the light output could also indicate the average noisiness within a certain time unit (e.g. average noisiness of the past hour, day, week, or month). This could give people passing by a quick glance of the noisiness of a certain area. Another type of response to the ambient noise can be using dynamics/variations in lighting intensity/colour of the divider to reflect the environment and trigger attention.

Further, as indicated above one may use the system to show (potential) noisiness of larger office areas, e.g. based on current and historical data. Such data may be used to assist a person in selecting an optimal office desk.

Yet further embodiments may allow detecting conversations of people close by and switch their environment to privacy and use amplification method described below
■ By analysing the sound received by different microphones, it can be discovered if people close by are talking to each other
■ Their environment can then be optimized by the method described below (amplification of speech to each other's desk) which at the same time decreases disturbance of other people as communication can be done with much lower voice Privacy can be set in their adjacent areas
■ The desk divider can automatically switch to a transmissive state to allow the sound to pass through to ease conversation.

As indicated above, some sound attenuating panels as described herein may include a transparent part that may be lit to reduce perceived transparency to increase privacy. When the light divider is in privacy mode, the lights are switched on to provide visual privacy and the speaker or array of speakers that are mounted on the desk dividers are switch off, such that speech/sound from one face of the desk is not amplified. In the communicative mode, the lights are switched off making the desk divider visually transparent and at the same time, the speaker array amplifies the sound as recorded by the microphones at the other face of the divider, locally at the location of the listener. In this way, an 'audio gateway' is created that facilitates communication between persons at different faces of the desk divider. An additional advantage is that people will lower their voice (as it is amplified) and neighbouring desks are less disturbed by the conversation. The speakers on the desk divider can also be used to produce optimal masking sounds, based on the signals that are received from the microphone.

Sound is not the only aspect that is potentially disturbing. Too much movement of people or items in a space can catch attention and be seen in the peripheral vision etc, leading to disturbances. By integrating a light sensor or CCD sensor, perhaps with a fish eye lens, in part of the divider, can enable a system to monitor the motion that takes place around it. Combine this with the identification of a person working at a desk (also via a motion sensing means) the divider can for example illuminate automatically (and perhaps very slowly to avoid it becoming disturbing also) to block movement from across the office from annoying the worker. Should people be moving too much, while others are trying to work, a warning light or other signal could be given.

The invention can e.g. be applied in open plan offices, work place innovation environments, in hospitality areas (e.g. in restaurants to improve the light quality, acoustics and feeling of privacy in the restaurants or lobby space), in home space (as open plan living becomes more popular and more areas of the home become multifunctional the need to screen off areas or 'open' them up will become more important), in museums (e.g. screens such as these could be used for interactive display cabinets that can reveal their contents when selected), in hospitals (e.g. often, people in hospitals share rooms and at sometimes they want privacy, e.g. during a check up of the doctor, while at other times they want to 'open up' and communicate to other patients in the room. The light divider with messaging function could be used here and replace the curtains that are currently often used.).

The invention also provides an adaptive light for room or desk dividers. For instance, the invention may provide a (vertical) screen such as a desk divider or room divider that can switch from an optically (nearly) transparent surface to a light-emitting (nearly) opaque-like surface and methods to control the light output. The control of the light output can be determined based on e.g. user input (i.e. intensity, color temperature, etc.) that is one or more of (i) explicit, e.g. remote control, switch, smart phone, personal computer, or any other type of personal control device, (ii) implicit, e.g. presence sensor, posture recognition, activity detection, face recognition, vitals signs monitoring or any other type of sensor that collects user related information. The control of the light output can be determined based on e.g. environmental parameters, such as ambient color information, light levels, noise levels, temperature, and other environmental parameters. The control methods may allow for setting the light output such that it provides optimal visual privacy, visual comfort, aesthetics / appearance, and/or fit with personal preferences.

Elements of the invention may especially be an optically transparent surface, a controllable light source, a control unit, and a sensor unit.

One element may be is a surface that is optically transparent or nearly transparent and can act as a light guide. An example of a material with this property is Evonik Plexiglass EndLighten, which turns into a homogenously luminous surface when lit from the edge. In the on-state, the surface can act as a visual privacy screen as one cannot look through the surface, while in the 'off-state' it is transparent and one can see through the surface. Obviously, various grades of transparency can be achieved through various light intensity levels. Also, various colors can be used to illuminate the surface.

A controllable light source can be used to illuminate the surface. For example, a LED strip can be mounted at the edge of the optically transparent surface, such that it couples in the light from the faces. The light source can change its output based on a control signal from the control unit. Aspects that can be changed include intensity and color. Also a gradient in both intensity and color can be envisioned.

A control unit may receive input from a sensor unit or user control element or a combination of sensors and control elements. The unit translates the input signal into light output commands that it sends to the controllable light source.

A sensor unit may receive information from the environment or about the user and sends this information to the control unit in case there are relevant changes in the environmental information. Different sensors unit can be used, such as a sensor that extract information about the user, including presence sensor, proximity, posture recognition, activity detection, gesture, face recognition, vital signs monitoring, or any other type of sensor that collects user related information. These sensors can be embedded in the frame of the room or desk divider, but can also be located elsewhere in the environment. In the latter case, the sensors can wirelessly communicate to the control unit of the desk / room divider. Similarly, sensors that collect information about the environment can be used in this invention. Environmental parameters that can be relevant for adapting the room / desk divider output include: ambient color information, light levels, noise levels, air quality, and temperature. Other environmental parameters can be envisioned to be relevant as well. Again, these environmental sensors can be physically integrated into the desk/room divider or work remotely.

A user control element acts upon a user input action by sending a signal to the control unit. This control element can be a push button on the desk / room divider frame, a remote control, a smartphone app, a software program on a pc, a gesture, or any other type of personal control device. Actions that a user can perform with the control elements include switching on and off, dimming, and changing the color.

There may be an additional input source. The panels, such as dividers could also be connected to the internet and this could be used as a source of data to determine the light output. For example, the panels could reflect the company's stock value via light color, the weather could influence the color temperature (cool in summer, warmer in winter maybe), the time of day or traffic info may be abstractly displayed etc.

In an embodiment, an object behind the divider can be "adapted". To ensure a maximum visual privacy when switching on the light on the desk/room divider, the divider can adapt the color the light output such that it optimally masks the object that is behind the screen. For example, it could particularly adapt the light output in regions where faces/people are visible such that it optimally masks the skin color of these persons or it blends in with the background color. Assume a person A and a person B sitting behind a desk with a desk divider C in between. This desk divider has an optical sensor D (camera) that 'looks' into the room and makes images. The colors in the images are analyzed and used to adapt the color of the light output on the desk divider. Several algorithms can be programmed to determine the light output. For example, the dominant color in the image can be determined and rendered on the desk divider. Alternatively, the color of the moving / foreground object can be detected and the light output could be adapted to optimally mask this person. The desk divider can also consist of locally controllable segments, such that for each region the light output that provides optimal masking can be set.

In a further embodiment light of such panel may be adapted to ambient lighting. Hence, in an embodiment, the light output of the desk divider will be adapted based on the ambient lighting. The control unit of the desk divider receives the ambient light information from a light sensor mounted on the frame. The user can control the light output of the desk divider. For example, via (i) a simple override switch to indicate to the system that they have a preferred state at that moment in time, (ii) voice and camera recognition to deduce if the two people opposite one another are talking to each other - the screen could then reduce its light output to lower the privacy setting; (iii) their presence, if no one is sitting at the workstation then the divider should not be on, etc.

In a further embodiment, the properties may be adapted to activity (Interactive Room Divider). For instance, using a switch or tapping the room divider turns into an interactive whiteboard, adapting its light output where you can only read the content from the writing face (unreadable from the other face/rear), and enabling interaction with virtual content or computer.

Open office spaces means people have to work in an environment that they share with many other people. Interaction with these people can sometimes be appreciated, but in other times less desired. For switchable active desk dividers are proposed. They can be changed from a more open nature to a private setting. We propose how to do this and how to enhance the desired effect.

A main element may be a waveguide or light guide, such as a sheet of EndLighten-T material from Evonik with LED's along its faces. When the LEDs are off the material is designed such that it resembles ordinary PMMA, a fully transparent sheet plastic. However, if we turn the LEDs on, the light of these LEDs will be trapped in the plate and the plate has diffuse particles such that the whole plate starts to emit light in all directions. The result of this is that, if you could see a fellow office worker sitting across you when the LEDs were off, that image now has to compete with the plate in between you that emits light. If the colleague is illuminated moderately, the light of the screen is dominant and you will be hardly able to see him/her. This is the straightforward and first embodiment.

A first user study where 24 participants performed reading and typing tasks with various intensity settings on this light divider embodiment was performed. The results show that people indeed perceive more visual privacy when the light is on. Also, there were no negative effects on visual comfort (e.g. glare) and even a slightly higher satisfaction with the overall lighting conditions in the working environment. The light intensity of the desk divider has a significant positive effect on perceived visual privacy.

If the office worker across you is very well lit the image of him/her is strong and might still be visible despite the sheet of luminous material in between. This means that if you focus on the screen you do not see the colleague, but if you focus on your colleague you can see him/her rather easily. Hence, in an embodiment it may be desired to make a person focus on the shining screen. The proposed active desk divider with a (gentle) pattern that both allows you to view your colleague in the off state of the divider as well as give you enhanced privacy in the on-state of the divider.

A further version with an even more pleasant appearance using laser cut slits in the plate can be used. The laser cuts acts as mirrors as they create a material-to-air transition that for slanted light hitting this surface will means a 100% reflection called Total Internal Reflection (TIR). Of course, the slits have to be interrupted to prevent the plate falling into small pieces, but when done correctly we can even make both horizontal and vertical bars that can trap the light that is emitted into them. Note that the light that hits the slit perpendicular is just passed and only slightly reflected (∼2x4%). So, light that travels horizontally is not disturbed by light travelling vertically and just locally mixed temporally. See the following pictures of a completely working concept demonstrator. Systems were made which showed the desired properties.

Another possibility to attract focus to the screen instead of to the colleague is to use a structured plate itself. One can make the screen out of ordinary transparent PMMA (Perspex) and have parts replaced by the EndLighten material, i.e. a waveguide with outcoupling properties perpendicular to the plane of the waveguide. In that embodiment only the EndLighten material will light up. Also this appeared to work in practice.

Another possibility is to place the EndLighten material between two semi-transparent plates. This makes the divider by default less transparent, but creates more privacy and homogeneity of the light when switched on.

The users' attention could also be drawn to the screen and not the person on the other face by using very gentle dynamic lighting from the LEDs. This may take the form of slow undulations in light level or a random but gentle fluctuation in color or color temperature. This could also be achieved by using a backless LCD panel to show video or picture content - in conjunction with this light panel - to provide privacy plus a distraction element.

In a further aspect, a desk divider with additional functions is proposed. In general, all these functions have in common that a certain status is shown. Functions may e.g. be selected from the group consisting of (1) busy indicator towards others, (2) timer for yourself (and/guest), (3) work rave like function, (4) alarm clock, (5) agenda item, (6) mail indicator, (7) occupancy time (for a room), (8) stress reducer (e.g. breathing rhythm), (9) circadian rhythm enhancer, (10) organize space using colors (e.g. collaboration space is green, concentration space is red, etc.), etc.

A probably known application can be that a red light indicates "please do not disturb", orange indicates "only if really necessary" and green says "feel free to talk to me". Hence, e.g. the color may indicate how urgent the office worker needs its concentration. An expansion to this can be that the user interface consists of a single button that will automatically make the color change from red towards orange to green (for instance in half an hour). This has multiple advantages. First it is very simple to use, secondly it automatically means that you are becoming available for discussion by design and thirdly it also indicate to yourself that time is passing by. On top of that, in case you need more time for yourself you can simply press the button again and thereby resetting the timer. Another option to control the business indicator via a connected software application that allows people to keep track of their 'business status', for example Instant Messaging applications like Microsoft Lync, Skype, or MSN Messenger.

If you have a certain job that needs to be finished in a predetermined time (e.g. a presentation before next meeting) you can set a timer for you to help you break up your time properly. Again an automatic change of color can be useful. E.g. start green (enough time left), next through orange towards red (you have to be finished)) and finish with 5 minutes of blue (in which you send the presentation around). A simple and easy to understand UI could be an enhanced egg timer as depicted in the following image. Similarly, you can use the timer to divide work between various tasks, projects, or customers. The color scheme might help you to see when it is time to start working on another project, and also communicates what you are working on (for people that know your color scheme). An option for UI could also be the agenda/calendar where it gets green when you have free slots, orange as a reminder that are 15 min left, and gets blue/red when 5 min. left and remains (get) red when you just left for a meeting.

Further, a (highly) intuitive User Interface for setting an allowed time for a specific tasks is provided. For instance, this timer can also be used if someone is visiting your desk and you have a certain amount time to discuss a topic. The timer-messaging will take care that both of you make good use of the time left.

In an embodiment, a work rave (program that assists in the recovery and prevention of Repetitive Strain Injury (RSI).) like function is provided. If the divider messenger is connected to a PC/notebook, for instance using Bluetooth (or through docking station), a few new options can be added. One is an indication of typing behavior similar to the program Workrave (program to prevent Repetitive Strain Injury (RSI)). The enhancement is that this might be a continuous and unobtrusive indicator. Furthermore, a social aspect is added to it, as colleagues can see when you are in the 'danger' zone and ask you for a cup of coffee.

In an embodiment, an alarm clock function is provided. An alarm clock function is also an obvious function that can either be initiated by a separate device (e.g. warn me in 2 hours) or by the 'PC' (warn me at 17:30).

Also an agenda item may be provided. Once connected to a device that holds your agenda, the items that are tagged as such can initiate a glowing messenger. Also a mail indicator may be provided. An incoming mail can either make the messenger blink green or red for a high importance message.

In an embodiment, an expected occupancy time (for a room) is provided. Instead of the messenger embodied inside the desk divider it might also be embedded in a glass window/door of a small meeting room. These rooms are shared by all the people in the large office space and meant for short usage for taking a phone call or have a (two) person discussion. The colored timer function can be used to indicate to other people whether this room will be available soon.

Further, also a stress reducer (e.g. breathing rhythm) may be provided. For instance, the light might be subtlety used as a means to help you breathe more slowly and make you relax. In yet a further embodiment, a circadian rhythm enhancer may be provided. For instance, the light might be made bright blue just after lunch to fight the well known after lunch dip. Or more general use blue light to (re)set your circadian rhythm for instance after an intercontinental trip.

In an embodiment, a space may be organized using colors (e.g. collaboration space is green, concentration space is red, etc.). The different colors of the divider messenger can be used to divide the space into areas/zones for the different types of activities. This could be used in other domains as well, where you need to structure areas or spaces. This can be linked to historical data so that spaces begin to evolve and users begin to understand which space is for which purpose. For example, if a certain area of an open plan area is used repeatedly for quiet working, then the system will see this from data collected via the embodiments described above and use the messaging function to communicate this to the other workers. When someone steps out of line and begins to speak too loudly, or for too long the light divider or other messaging set up may discretely inform them (the 'Shhh' from the librarian!)

While the embodiments may primarily focus on open plan office setting, our invention could equally be applied to other domain such as hospitals. Often, people in hospitals share rooms and at sometimes they want privacy, e.g. during a check up of the doctor, while at other times they want to 'open up' and communicate to other patients in the room. The light divider with messaging function could be used here and replace the curtains that are currently often used. This could also be used in other social environments such as cafes or restaurants, or hotel lobbies where people may wish to be solitary or open to others to chat with them. Nowadays, this may be easier to achieve via this kind of digital prompt. Also, the seats to meet locations may like to use such a system to show whether people are open for discussion or the type of area they will be working in.

## Claims

1. A system (1) comprising a sound attenuating panel (100), a control unit (15), and a sound sensor (20), wherein the sound sensor (20) is configured to measure sound in a space wherein the sound attenuating panel (100) is applied and is configured to provide a corresponding sound sensor signal, wherein the control unit (15) is configured to control a controllable device as function of the sound sensor signal, wherein the controllable device is selected from the group consisting of a sound attenuating panel (100) having controllable properties and another device having controllable properties.

2. The system according to claim 1, wherein the sound attenuating panel (100) has controllable sound attenuation properties and wherein the control unit (15) is configured to control the sound attenuating properties as function of one or more of the sound sensor signal and a signal of another sensor (1200), wherein the sound sensor (20) comprises one or more of a microphone and a sound pressure sensor, and wherein the other sensor (1200) is selected from the group consisting of an environmental condition sensor, a motion sensor, a light sensor, a camera, and a vibration sensor.

3. The system (1) according to claim 2, wherein the sound attenuating panel (100) comprises (a) a sound attenuating unit (200) with cavities (212) with variable dimensions and (b) an infrastructure (300) for controlling the dimensions of the cavities (212) in the sound attenuating unit (200).

4. The system (1) according to any one of the preceding claims, wherein one or more of the sound sensor (20) and a speaker (1130) are integrated in the sound attenuating panel (100), wherein the sound sensor (20) comprises a microphone (1140).

5. The system (1) according to any one of the preceding claims, further comprising a signal unit (1150) configured to indicate a sound level as function of the sound sensor signal.

6. The system (1) according to any one of the preceding claims, wherein the control unit (15) is configured to control the device as function of the sound sensor signal, wherein the device is selected from the group consisting of (i) a light source (1110) not embedded in the sound attenuating panel (100), (ii) a sound attenuating panel (100) with a light source (1120) embedded therein, (iii) a sound attenuating panel (100) having controllable sound attenuation properties, (iv) a speaker (1130), (v) a microphone (1140), and (vi) a signal unit (1150).

7. The system (1) according to any one of the preceding claims, wherein the control unit (15) is configured to control the controllable device as function of historical sound data.

8. The system (1) according to any one of the preceding claims, wherein the control unit (15) is configured to control the controllable device to assist a human in performing an activity as function of the sound sensor signal, based on a predetermined relation between the sound sensor signal and one or more controllable features of the controllable device.

9. The system (1) according to any one of the preceding claims, wherein the system further comprises one or more of a user interface (151) integrated in the sound attenuating panel (100) and a remote user interface (152).

10. The system (1) according to any one of the preceding claims, wherein sound attenuating panel (100) comprises a sound attenuating unit (200), wherein the sound attenuating unit (200) comprises a transparent unit part (400) comprising a material (250) that is transparent for visible light, wherein the sound attenuating panel (100) further comprises a light source (10) that is configured to provide light (11) into the transparent unit part (400), wherein the transparent unit part (400) has light guiding properties and wherein the transparent unit part (400) is configured to allow transmission of visible light from a first face (101) of the sound attenuating panel (100) to a second face (102), and wherein the transparent unit part (400) and light source (10) are configured to provide light (12) escaping to both faces (101,102) of the sound attenuating panel (100).

11. The system according to claim 10, wherein the sound attenuating unit (200) comprises sound attenuating material (201), wherein the sound attenuating material (201) comprises said material (250) that is transparent for visible light.

12. The system (1) according to any one of the preceding claims, comprising a plurality of sound attenuating panels (100), a control unit (15), and a plurality of sound sensors (20), wherein the sound sensors (20) are configured to measure sound in a space wherein the sound attenuating panels (100) are applied and wherein the sound sensors are configured to provide corresponding sound sensor signals, wherein the control unit (15) is configured to control a controllable device as function of one or more of the sound sensor signals, wherein the controllable device is selected from the group consisting of one or more of sound attenuating panels (100) having controllable properties and another device having controllable properties.

13. A sound attenuating panel (100), comprising a light source (10) that is configured to provide light (11) into a transparent unit part (400), wherein the transparent unit part (400) has light guiding properties and wherein the transparent unit part (400) is configured to allow transmission of visible light from a first face (101) of the sound attenuating panel (100) to a second face (102), and wherein the transparent unit part (400) and light source (10) are configured to provide light (12) escaping to at least one of the faces (101,102) of the sound attenuating panel (100), wherein the sound attenuating panel (100) further comprises a control unit (15) configured to control a controllable device as function of a sound sensor signal of a sound sensor, wherein the controllable device is selected from the group consisting of a sound attenuating panel (100) having controllable properties and another device having controllable properties.

14. The sound attenuating panel (100) according to claim 13, further comprising a sound sensor (20) configured to provide a sound sensor signal, wherein the sound sensor (20) comprises one or more of a microphone and a sound pressure sensor.

15. A method to assist a human in performing an activity, the method comprising using the system (1) as claimed in any one of claims 1-12, and controlling with the control unit (15) one or more settings of the controllable device as function of the sound sensor signal, wherein the controllable device is selected from a group consisting of (i) a light source (1110) not embedded in the sound attenuating panel (100), (ii) a sound attenuating panel (100) with a light source (1120) embedded therein, (iii) a sound attenuating panel (100) having controllable sound attenuation properties, (iv) a speaker (1130), (v) a microphone (1140), and (vi) a signal unit (1150).
